# EUROPÄISCHE PATENTSCHRIFT

(11) **EP 3 408 559 B1**
(45) Veröffentlichungstag und Bekanntmachung des Hinweises auf die Patenterteilung: **18.11.2020**
(21) Anmeldenummer: 17705802.1
(22) Anmeldetag: 25.01.2017
(51) Int. Cl.: F16F 13/14, F16F 13/28

(54) **ELASTOMERLAGER**
ELASTOMER BEARING
PALIER ÉLASTOMÈRE

(30) Priorität: 26.01.2016 DE 102016101310
(43) Veröffentlichungstag der Anmeldung: 05.12.2018
(73) Patentinhaber: BOGE Elastmetall GmbH, 49401 Damme (DE); Ford-Werke GmbH, 50735 Köln (DE)
(72) Erfinder: WITTBRACHT, Frank, 33829 Borgholzhausen (DE); BURWINKEL, Josef, 49413 Dinklage (DE); LOHEIDE, Stefan, 49134 Wallenhorst (DE); LORDICK, Achim, 51109 Köln (DE); SCHMITZ, Thomas, 45219 Essen (DE); MENDEL, Marc, 42781 Haan (DE)
(74) Vertreter: Bossmeyer, Jörg Peter
(86) Internationale Anmeldenummer: PCT/EP2017/051574
(87) Internationale Veröffentlichungsnummer: WO 2017/129635

(56) Entgegenhaltungen:
- EP-A1- 2 663 788
- WO-A1-01/42681
- WO-A1-2012/002402
- DE-A1- 10 213 627

## Beschreibung

Die Erfindung betrifft ein Elastomerlager mit einem Innenteil, einem das Innenteil umringenden Außenteil und einem zwischen dem Innenteil und dem Außenteil angeordneten und sowohl mit dem Innenteil als auch mit dem Außenteil verbundenen Elastomerkörper, der wenigsten zwei mit einer Flüssigkeit gefüllte Flüssigkeitskammern umfasst, die durch wenigstens zwei Kanäle miteinander verbunden sind.

Aus dem Stand der Technik sind Lösungen zur Steifigkeitsreduktion von hydraulisch dämpfenden Elastomerlagern für definierte Amplituden bekannt. Diese Lösungen ermöglichen aber keinen quasi-statischen Fluidaustausch zwischen den Flüssigkeitskammern und gewährleisten damit auch keine vorlastunabhängige Reduktion der Steifigkeit. Somit besteht der Wunsch, für definierte Amplituden, insbesondere für kleine Amplituden, eine Steifigkeitsabsenkung erzielen zu können, wobei die Amplitudenentkopplung in einem bestimmten Kraftbereich vorzugsweise unabhängig von der Vorlast sein soll.

Die WO 2012/002402 A1 beschreibt ein Gummilager mit zwei Flüssigkeitskammern, die durch Kanäle miteinander verbunden sind, und einer in einen der Kanäle geschalteten Platteneinheit, die Öffnungen zu dem einen Kanal und eine bewegliche Platte umfasst, die in einem Bewegungsraum der Platteneinheit angeordnet und in Richtung des einen Kanals bewegbar ist, wobei die Ventilöffnungen durch die bewegliche Platte verschließbar sind.

Die EP 2 663 788 A1 offenbart ein Feder- und Dämpfersystem mit wenigstens einem Feder-/Dämpferelement, das zwischen zwei relativ zueinander verlagerbaren Fahrzeugmassen angeordnet ist, wobei das wenigstens eine Feder-/Dämpferelement eine Dämpfereinrichtung sowie ein Positionierfederelement aufweist, die mittelbar oder unmittelbar miteinander gekoppelt sowie in Reihe geschaltet sind und die sich an der jeweils zugeordneten Fahrzeugmasse abstützen und/oder dort angebunden sind, und wobei auf der dämpferabgewandten Positionierfederelementseite des Feder-/Dämpferelementes ein weiteres ein- oder mehrteiliges Federelement in Form eines Progressionsfederelementes als weiterer Bestandteil des Feder-/Dämpferelementes angeordnet ist, das, mittelbar oder unmittelbar, an der Dämpfereinrichtung und/oder an der positionierfederelementseitigen Fahrzeugmasse angebunden ist und das in einer definierten Grundstellung einen definierten, progressionsfederelementseitigen Spaltabstand als Federweg ausbildet.

Die DE 102 13 627 A1 beschreibt ein hydraulisch dämpfendes Gummilager, bestehend aus einem Innenteil, einem konzentrisch oder exzentrisch dazu im Abstand angeordneten Außenteil und dazwischen eingesetztem Gummiteil, in welchem mindestens zwei dämpfungsmittelgefüllte Kammern angeordnet sind, wobei mindestens zwei Kammern über eine Strömungsverbindung miteinander verbunden sind, und wobei die Strömungsverbindung aus mindestens zwei Einzelverbindungen besteht, von denen mindestens eine Einzelverbindung zu- bzw. abschaltbar ist.

Die DE 199 59 391 A1 offenbart ein hydraulisch dämpfendes Lager mit zwei Kammern, die mit einer hydraulischen Flüssigkeit gefüllt und über mindestens einen Überströmkanal und mindestens einen Entkopplungskanal miteinander verbunden sind, wobei in dem Entkopplungskanal ein beweglicher Schwingkörper aufgenommen ist, der entlang des Entkopplungskanals verschieblich ist, und wobei eine Einrichtung zum Aufbringen einer veränderlichen Kraft auf den Schwingkörper vorgesehen ist, um die Steifigkeitseigenschaften des Lagers zu verändern. Der Schwingkörper ist als Hohlzylinder mit einer Trennwand, in der eine Bohrung vorgesehen ist, ausgebildet.

Die Einrichtung zum Aufbringen der veränderlichen Kraft auf den Schwingkörper des vorgenannten Lagers umfasst z.B. mindestens eine Spule zum Erzeugen eines auf den aus einem magnetischen Material gefertigten Schwingkörper wirkenden Magnetfelds, sodass durch Variation des Erregerstroms der Spule die auf den Schwingkörper aufgebrachte Kraft stufenlos verändert werden kann. Zur Realisierung des Lagers ist somit ein nicht unerheblicher baulicher und elektronischer Aufwand zu treiben, der das Lager verteuert. Zwar ist bei diesem Lager eine besonders feine Einstellbarkeit der Steifigkeit möglich, dies ist in der Praxis aber nicht immer erforderlich. Ferner reduziert die integrierte Blende im Schwingkörper die Miniaturisierung. Letztere ist allerdings erwünscht, um einerseits den Bauraum zu begrenzen und andererseits einen Freiweg, um den das Innenteil relativ zu dem Außenteil bis zum Einsetzen einer Progression der Lagersteifigkeit bewegbar ist, mit möglichst hoher Genauigkeit einstellen zu können.

Ausgehend hiervon liegt der Erfindung die Aufgabe zugrunde, eine einfachere, insbesondere kostgünstigere Lösung zur Variation der Steifigkeit des Lagers zu schaffen.

Diese Aufgabe wird erfindungsgemäß mit einem Elastomerlager nach Anspruch 1 gelöst. Bevorzugte Weiterbildungen der Erfindung sind in den Unteransprüchen und in der nachfolgenden Beschreibung gegeben.

Das erfindungsgemäße Elastomerlager weist ein Innenteil, ein das Innenteil umringendes Außenteil und einen zwischen dem Innenteil und dem Außenteil angeordneten und sowohl mit dem Innenteil als auch mit dem Außenteil verbundenen Elastomerkörper auf, der zwei oder wenigsten zwei mit einer Flüssigkeit gefüllte Flüssigkeitskammern umfasst, die durch zwei oder wenigstens zwei Kanäle miteinander verbunden sind, wobei in einem ersten der Kanäle ein bidirektional wirkendes Ventil vorgesehen ist. Bevorzugt erstreckt sich der Elastomerkörper von dem Innenteil bis zu dem Außenteil.

Durch das bidirektional wirkende Ventil kann der erste Kanal, insbesondere in jeder Strömungsrichtung, geöffnet und/oder gesperrt werden. Somit ist eine einfache Möglichkeit zur Variation der Steifigkeit des Elastomerlagers geschaffen. Ferner ist ein bidirektional wirkendes Ventil relativ kostengünstig realisierbar, insbesondere, wenn es als bidirektional wirkendes Kugelventil ausgebildet ist.

Der Elastomerkörper ist vorzugsweise kraftschlüssig oder stoffschlüssig mit dem Innenteil verbunden, beispielsweise an dieses anvulkanisiert. Ferner ist der Elastomerkörper vorzugsweise kraftschlüssig oder stoffschlüssig mit dem Außenteil verbunden, beispielsweise an dieses anvulkanisiert. Insbesondere ist der Elastomerkörper unter Vorspannung zwischen dem Innenteil und dem Außenteil angeordnet. Das Elastomerlager kann z.B. auch als Hydrolager bezeichnet werden. Beispielsweise ist das Elastomerlager ein hydraulisch dämpfendes Elastomerlager.

Vorteilhaft umfasst der Elastomerkörper elastisch verformbare und die Flüssigkeitskammern begrenzende Kammerwände, die insbesondere als Beulfedern wirken. Bevorzugt weist das Elastomerlager Schnittstellen auf, über welche Kräfte in das Elastomerlager eintragbar sind. Vorzugsweise umfassen die Schnittstellen das Innenteil und das Außenteil und/oder sind durch das Innenteil und das Außenteil gebildet. Insbesondere ist der Elastomerkörper zwischen die Schnittstellen geschaltet. Bevorzugt umfasst das Elastomerlager ein schwingungsfähiges System, welches insbesondere die oder zumindest die als Beulfedern wirkenden Kammerwände, die Flüssigkeitskammern und die Kanäle aufweist. Vorzugsweise ist das schwingungsfähige System zwischen die Schnittstellen geschaltet. In Bezug auf die Schnittstellen ist das schwingungsfähige System somit insbesondere mit dem Elastomerkörper oder Teilen des Elastomerkörpers parallel geschaltet.

Werden dynamische Kräfte in das Lager eingetragen, die zu Bewegungen des Innenteils relativ zu dem Außenteil führen, so werden diese Bewegungen durch den Elastomerkörper und/oder das schwingungsfähige System gedämpft. Weisen die dynamischen Kräfte eine geringe Frequenz auf, so erfolgt die Dämpfung der Bewegungen vornehmlich durch elastische Verformungen des Elastomerkörpers. Zwar führt eine Verformung des Elastomerkörpers in der Regel auch zu einer Verformung der Flüssigkeitskammern, bei geringen Frequenzen kann die Flüssigkeit aber nahezu frei oder ungehindert zwischen den Flüssigkeitskammern durch die Kanäle oder zumindest durch den zweiten Kanal ausgetauscht werden, der insbesondere einen Überströmkanal bildet. Mit steigender Frequenz der dynamischen Kräfte trägt das schwingungsfähige System aber zunehmend zur Dämpfung bei. Dabei wird der Beitrag des schwingungsfähigen Systems an der Dämpfung bei einer Resonanzfrequenz maximal, die insbesondere durch die bauliche Ausgestaltung des schwingungsfähigen Systems und/oder durch die Viskosität der Flüssigkeit und/oder durch deren Dichte bestimmt ist. Übersteigt die Frequenz der dynamischen Kräfte die Resonanzfrequenz, kann die Flüssigkeit, insbesondere im Überströmkanal, den eingetragenen Kräften nicht mehr oder nur noch verzögert folgen, sodass mit weiterer Zunahme der Frequenz die Steifigkeit des Elastomerlagers steigt. Sind die Amplituden der Bewegungen des Innenteils relativ zu dem Außenteil aber klein, so kann, insbesondere innerhalb eines bestimmten Frequenzbereichs, vorzugsweise auch bei höheren Frequenzen ein nahezu ungehinderter Flüssigkeitsaustausch zwischen den Flüssigkeitskammern durch einen Entkopplungskanal erfolgen, der insbesondere durch den ersten Kanal gebildet ist. Der Entkopplungskanal ist bevorzugt kürzer als der Überströmkanal. Ferner weist der Entkopplungskanal vorzugsweise einen größeren Strömungsquerschnitt als der Überströmkanal auf. Durch den Entkopplungskanal ist es somit möglich, für den oder einen bestimmten Frequenzbereich den Überströmkanal zu überbrücken. Der Entkopplungskanal als solcher bietet allerdings nur eine unbefriedigende Möglichkeit, die Amplituden der Bewegungen zu begrenzen. Eine solche Begrenzung ist aber erwünscht, da der Entkopplungskanal nur für kleine Amplitude wirksam sein soll. Erfindungsgemäß wird eine solche Begrenzung durch das bidirektional wirkende Ventil erzielt, welches insbesondere ab einer vorgegebenen Bewegungsamplitude und/oder ab einem durch den ersten Kanal in einer Strömungsrichtung hindurch getretenen Flüssigkeitsvolumen den ersten Kanal verschließt oder sperrt. Somit erfolgt im geschlossenen oder gesperrten Zustand des Ventils eine Erhöhung der Steifigkeit, insbesondere durch die nun wirkenden Beulfedern des Elastomerkörpers und durch den in den Flüssigkeitskammern wirkenden Druck, der über Wirkflächen der Flüssigkeitskammern als zusätzliche Kraft einer weiteren Bewegung des Innenteils relativ zu dem Außenteil entgegenwirkt.

Gemäß einer Weiterbildung kann das bidirektional wirkende Ventil zwei Sperrzustände annehmen. In einem ersten Sperrzustand des Ventils oder in einem ersten der Sperrzustände des Ventils ist bevorzugt ein Flüssigkeitsfluss in dem ersten Kanal in einer ersten Strömungsrichtung durch das Ventil gesperrt. Insbesondere ist im ersten Sperrzustand des Ventils aber ein Flüssigkeitsfluss in dem ersten Kanal in einer zweiten Strömungsrichtung durch das Ventil freigegeben und/oder ermöglicht, die der ersten Strömungsrichtung entgegengesetzt ist. In einem zweiten Sperrzustand des Ventils oder in einem zweiten der Sperrzustände des Ventils ist bevorzugt ein Flüssigkeitsfluss in dem ersten Kanal in der oder einer zweiten Strömungsrichtung durch das Ventil gesperrt, die insbesondere der ersten Strömungsrichtung entgegengesetzt ist. Insbesondere ist im zweiten Sperrzustand des Ventils aber ein Flüssigkeitsfluss in dem ersten Kanal in der ersten Strömungsrichtung durch das Ventil freigegeben und/oder ermöglicht. Ferner kann das Ventil bevorzugt einen geöffneten oder begrenzt geöffneten Zustand annehmen. In dem oder einem geöffneten oder begrenzt geöffneten Zustand des Ventils ist bevorzugt ein Flüssigkeitsfluss in dem ersten Kanal, insbesondere in der ersten Strömungsrichtung und/oder in der zweiten Strömungsrichtung und/oder in jeder Strömungsrichtung und/oder in beide Strömungsrichtungen, durch das Ventil freigegeben und/oder ermöglicht. Vorteilhaft ist im geöffneten oder begrenzt geöffneten Zustand des Ventils ein Flüssigkeitsfluss in dem ersten Kanal, insbesondere je Strömungsrichtung, aber nur bis zu einem vorgegebenen Flüssigkeitsvolumen freigegeben und/oder ermöglicht. Wird dieses vorgegebene Flüssigkeitsvolumen für eine der Strömungsrichtungen erreicht, so wird insbesondere durch das Ventil der dieser Strömungsrichtung zugeordnete Sperrzustand angenommen und ein weiterer Flüssigkeitsfluss in dieser Strömungsrichtung gesperrt.

Bevorzugt ist das bidirektional wirkende Ventil durch in dem ersten Kanal strömende Flüssigkeit und/oder durch die durch den ersten Kanal strömende Flüssigkeit betätigbar. Somit kann eine externe Steuerungseinrichtung zum Betätigen des Ventils entfallen. Vorteilhaft ist das bidirektional wirkende Ventil, insbesondere ausgehend vom geöffneten Zustand, durch einen Flüssigkeitsfluss in der ersten Strömungsrichtung in den ersten Sperrzustand überführbar. Vorzugsweise ist das bidirektional wirkende Ventil, insbesondere ausgehend vom geöffneten Zustand, durch einen Flüssigkeitsfluss in der zweiten Strömungsrichtung in den zweiten Sperrzustand überführbar. Bevorzugt ist das bidirektional wirkende Ventil ausgehend vom ersten Sperrzustand durch einen Flüssigkeitsfluss in der zweiten Strömungsrichtung in den geöffneten Zustand überführbar. Vorteilhaft ist das bidirektional wirkende Ventil ausgehend vom zweiten Sperrzustand durch einen Flüssigkeitsfluss in der ersten Strömungsrichtung in den geöffneten Zustand überführbar.

Gemäß einer Ausgestaltung ist durch das bidirektional wirkende Ventil ein Flüssigkeitsfluss durch den ersten Kanal, insbesondere in der ersten Strömungsrichtung und/oder in der zweiten Strömungsrichtung und/oder in jeder Strömungsrichtung, auf das oder ein vorgegebenes Flüssigkeitsvolumen begrenzt oder begrenzbar. Somit ist es möglich, im Rahmen des vorgegebenen Flüssigkeitsvolumens einen Flüssigkeitsaustausch zwischen den Kammern und/oder durch den ersten Kanal, insbesondere in der ersten Strömungsrichtung und/oder in der zweiten Strömungsrichtung und/oder in jeder Strömungsrichtung und/oder in der jeweiligen Strömungsrichtung, zu ermöglichen und einen darüber hinausgehenden Flüssigkeitsaustausch, insbesondere in der ersten Strömungsrichtung und/oder in der zweiten Strömungsrichtung und/oder in jeder Strömungsrichtung und/oder in der jeweiligen Strömungsrichtung, zu sperren oder zu begrenzen.

Gemäß einer Weiterbildung weist das Ventil zwei im Abstand zueinander angeordnete Ventilsitze und einen zwischen diesen bewegbar angeordneten Absperrkörper auf. Insbesondere ist der Absperrkörper in dem ersten Kanal und/oder in einem Kanalabschnitt des ersten Kanals angeordnet, wobei die Ventilsitze vorzugsweise in dem ersten Kanal oder an den Enden des ersten Kanals und/oder in dem Kanalabschnitt oder an den Enden des Kanalabschnitts vorgesehen oder angeordnet sind. Bevorzugt ist der Absperrkörper an jeden der Ventilsitze, insbesondere flüssigkeitsabdichtend, anlegbar. Beispielsweise sind die Ventilsitze durch Dichtungsringe gebildet. Bevorzugt ist der Absperrkörper durch in dem ersten Kanal strömende Flüssigkeit und/oder durch die in dem ersten Kanal strömende Flüssigkeit, insbesondere in dem ersten Kanal und/oder entlang des ersten Kanals und/oder zwischen den Ventilsitzen, bewegbar. In diesem Sinne bildet der Absperrkörper bevorzugt ein Entkopplungselement. Bevorzugt ist der Absperrkörper kugelförmig ausgebildet und/oder bildet eine Kugel. Das bidirektional wirkende Ventil bildet insbesondere ein bidirektional wirkendes Kugelventil. Vorzugsweise ist der Absperrkörper durch in dem ersten Kanal strömende Flüssigkeit und/oder durch die in dem ersten Kanal strömende Flüssigkeit an jeden der Ventilsitze, insbesondere flüssigkeitsabdichtend, anlegbar. Bevorzugt ist einem ersten der Ventilsitze der erste Sperrzustand und einem zweiten der Ventilsitze der zweite Sperrzustand zugeordnet. Insbesondere liegt der Absperrkörper im ersten Sperrzustand, vorzugsweise flüssigkeitsabdichtend, an dem ersten Ventilsitz an. Bevorzugt liegt der Absperrkörper im zweiten Sperrzustand, vorzugsweise flüssigkeitsabdichtend, an dem zweiten Ventilsitz an. Ein Freiweg, um den das Innenteil relativ zu dem Außenteil bis zum Sperren des Ventils bewegbar ist, ist insbesondere abhängig vom Verhältnis des Kanalquerschnitts zu den Wirkflächen der Flüssigkeitskammern sowie von der Länge des Bewegungswegs des Absperrkörpers im ersten Kanal.

Gemäß einer Ausgestaltung weist das Ventil einen, insbesondere rohrförmigen, Ventilkörper auf, in oder an dem insbesondere die Ventilsitze vorgesehen sind, zwischen denen der Absperrkörper bewegbar in dem Ventilkörper angeordnet ist. Vorzugsweise sind die Ventilsitze an den Enden des Ventilkörpers vorgesehen. Der Innenraum des Ventilkörpers bildet insbesondere den ersten Kanal, einen Teil des ersten Kanals und/oder den Kanalabschnitt des ersten Kanals. In diesem Sinne wird der Innenraum des Ventilkörpers vorzugsweise dem ersten Kanal und/oder dem Kanalabschnitt zugerechnet.

Vorteilhaft ist der Durchmesser oder Innendurchmesser des ersten Kanals zwischen den Ventilsitzen größer oder gleich oder näherungsweise gleich dem Durchmesser oder Außendurchmesser des Absperrkörpers. Beispielsweise ist der Durchmesser oder Außendurchmesser des Absperrkörpers an den Durchmesser oder Innendurchmesser des ersten Kanals zwischen den Ventilsitzen angepasst oder näherungsweise angepasst. Somit ist vermeidbar, dass Flüssigkeit oder zu viel Flüssigkeit an dem Absperrkörper vorbeiströmt und dieser nicht oder nicht im gewünschten Maße mit der Strömung der Flüssigkeit mitbewegt werden kann. Vorzugsweise weist der erste Kanal zwischen den Ventilsitzen einen kreisförmigen und/oder konstanten Querschnitt oder Innenquerschnitt auf.

Bevorzugt ist dem Ventil und/oder dem geöffneten oder begrenzt geöffneten Zustand des Ventils eine Nulllage oder Ruhelage des Absperrkörpers in dem ersten Kanal zugeordnet. Vorzugsweise ist der geöffnete oder begrenzt geöffnete Zustand des Ventils durch die oder eine Nulllage oder Ruhelage des Absperrkörpers in dem ersten Kanal definiert. Die Ruhelage oder Nulllage liegt insbesondere zwischen den Ventilsitzen. Vorteilhaft befindet sich der Absperrkörper im geöffneten Zustand des Ventils, insbesondere anfänglich, in der Nulllage oder Ruhelage. Der Ausdruck "insbesondere anfänglich" berücksichtigt, dass der Absperrkörper bevorzugt durch in dem ersten Kanal strömende Flüssigkeit und/oder durch die in dem ersten Kanal strömende Flüssigkeit bewegbar ist.

Bevorzugt ist dem ersten Sperrzustand des Ventils ein erster der Ventilsitze und/oder eine erste Sperrlage des Absperrkörpers zugeordnet. Insbesondere liegt im ersten Sperrzustand und/oder in der ersten Sperrlage der Absperrkörper an dem ersten Ventilsitz, vorzugsweise flüssigkeitsabdichtend, an. Vorteilhaft ist dem zweiten Sperrzustand des Ventils ein zweiter der Ventilsitze und/oder eine zweite Sperrlage des Absperrkörpers zugeordnet. Insbesondere liegt im zweiten Sperrzustand und/oder in der zweiten Sperrlage der Absperrkörper an dem zweiten Ventilsitz, vorzugsweise flüssigkeitsabdichtend, an. Die oder eine Ruhelage oder Nulllage des Absperrkörpers liegt insbesondere zwischen den Sperrlagen.

Der erste Kanal kann zwischen den Ventilsitzen insgesamt gerade verlaufen. Bevorzugt verläuft der erste Kanal zwischen den Ventilsitzen aber gekrümmt oder V-förmig und/oder der erste Kanal ist zwischen den Ventilsitzen gekrümmt oder V-förmig ausgebildet. Bei geeigneter räumlicher Ausrichtung des Elastomerlagers ist der Absperrkörper somit aufgrund der Schwerkraft oder Erdanziehung in eine definierte Lage überführbar. Ergänzend oder alternativ kann aber auch ein Rückstellmechanismus vorgesehen sein, mittels welchem der Absperrkörper, beispielsweise durch Federkraft oder magnetisch, in die oder eine definierte Lage überführbar ist. Ein magnetischer Rückstellmechanismus kann z.B. einen im Bereich der definierten Lage angeordneten Permanentmagneten umfassen, der magnetisch anziehend auf den Absperrkörper wirkt, der dazu bevorzugt ein ferromagnetisches Material umfasst oder aus diesem gebildet ist. Beispielsweise umfasst der erste Kanal und/oder der Kanalabschnitt zwei in einem Übergangsbereich ineinander übergehende Kanalschenkel, die vorzugsweise zueinander abgewinkelt sind. An den voneinander abgewandten Enden der Kanalschenkel sind insbesondere die Ventilsitze vorgesehen. Bevorzugt sind die Kanalschenkel jeweils gerade oder gekrümmt ausgebildet. Der Übergangsbereich bildet vorzugsweise die definierte Lage. Die definierte Lage liegt bevorzugt zwischen den Ventilsitzen. Insbesondere entspricht die definierte Lage der Nulllage oder Ruhelage. Beispielsweise umfasst der Ventilkörper die Kanalschenkel.

Gemäß einer Weiterbildung umfasst der Rückstellmechanismus wenigstens eine den Absperrkörper in die oder eine definierte Lage drängende Feder. Gemäß einer anderen Weiterbildung umfasst der Rückstellmechanismus wenigstens einen, vorzugsweise im Bereich der oder einer definierten Lage angeordneten, Magnet, wobei der Absperrkörper insbesondere ferromagnetische Eigenschaften aufweist. Der Magnet ist bevorzugt ein Permanentmagnet. Vorzugsweise besteht der Absperrkörper, insbesondere zumindest teilweise, aus einem magnetischen oder ferromagnetischen Material. Bevorzugt entspricht die definierte Lage der Nulllage oder Ruhelage.

Bevorzugt ist das Elastomerlager bezüglich der Erdoberfläche derart ausgerichtet, dass der erste Kanal zwischen den Ventilsitzen eine, insbesondere unter diesen liegende, tiefste Stelle (Tiefpunkt) aufweist. Dies ist insbesondere dann sinnvoll, wenn der erste Kanal zwischen den Ventilsitzen gekrümmt oder V-förmig ausgebildet ist. Der Tiefpunkt und/oder die tiefste Stelle entspricht vorzugsweise dem Übergangsbereich und/oder ist in diesem vorgesehen und/oder durch diesen gebildet.

Bevorzugt weist der zweite Kanal oder ein zweiter der Kanäle eine kleinere hydraulische Resonanzfrequenz als der erste Kanal auf. Insbesondere ist der Durchmesser des ersten Kanals größer als der Durchmesser des zweiten Kanals oder eines zweiten der Kanäle. Vorzugsweise bildet der zweite Kanal oder ein zweiter der Kanäle einen Überströmkanal. Vorzugsweise ist die Länge des ersten Kanals kürzer als die Länge des zweiten Kanals oder eines zweiten der Kanäle. Bevorzugt verläuft der zweite Kanal oder ein zweiter der Kanäle mäanderförmig.

Der zweite Kanal bildet bevorzugt mit den Beulfedern ein, vorzugsweise niederfrequentes, Resonanzsystem, oberhalb von dessen Resonanzfrequenz der zweite Kanal inaktiv ist, sodass der erste Kanal wirken kann. Für sehr niedrige Frequenzen hingegen ist der zweite Kanal insbesondere offen und bewirkt einen quasistatischen Flüssigkeitsausgleich zum Ausgleich unterschiedlicher Vorlasten. Das Resonanzsystem bildet bevorzugt einen Teil des schwingungsfähigen Systems.

Das Innenteil erstreckt sich bevorzugt in einer axialen Richtung. Insbesondere erstreckt sich durch das Innenteil eine in axialer Richtung durchgehende Ausnehmung oder Bohrung hindurch. Vorzugsweise ist das Innenteil zylindrisch oder im Wesentlichen zylindrisch ausgebildet. Vorteilhaft besteht das Innenteil aus Kunststoff oder aus Metall, insbesondere aus Stahl, aus Aluminium oder aus Magnesium.

Das Außenteil erstreckt sich bevorzugt in axialer Richtung. Vorteilhaft sind das Innenteil und das Außenteil koaxial angeordnet. Insbesondere ist das Außenteil als Hülse ausgebildet und kann somit auch als Außenhülse bezeichnet werden. Vorzugsweise ist das Außenteil zylindrisch oder im Wesentlichen zylindrisch ausgebildet. Vorteilhaft besteht das Außenteil aus Kunststoff oder aus Metall, insbesondere aus Stahl, aus Aluminium oder aus Magnesium.

Der Elastomerkörper besteht bevorzugt aus einem elastomeren Material, beispielsweise aus Gummi. Die Flüssigkeitskammern sind insbesondere axial zueinander versetzt angeordnet. Alternativ sind die Flüssigkeitskammern z.B. in Umfangsrichtung zueinander versetzt angeordnet. Bevorzugt sind die Flüssigkeitskammern, insbesondere in axialer Richtung oder in Umfangsrichtung, voneinander getrennt. Vorteilhaft sind die Flüssigkeitskammern, insbesondere in axialer Richtung oder in Umfangsrichtung, durch den Elastomerkörper voneinander getrennt.

Der Absperrkörper besteht z.B. aus Kunststoff oder aus Metall. Bevorzugt besteht der Absperrkörper aus Vollmaterial. Vorteilhaft weist der Absperrkörper eine geschlossene Oberfläche auf. Insbesondere ist in dem Absperrkörper kein Durchgangsloch zum Durchtritt von Flüssigkeit vorgesehen.

Gemäß einer Ausgestaltung ist ein Kanalträger vorgesehen, in dem die Kanäle vorgesehen sind. Der Kanalträger ist insbesondere ringförmig oder teilringförmig ausgebildet. Beispielsweise ist der Kanalträger aus zwei Halbschalen oder mehreren Teilschalen zusammengesetzt. Vorteilhaft ist der Kanalträger, insbesondere in radialer Richtung, zwischen dem Innenteil und dem Außenteil und/oder zwischen dem Elastomerkörper und dem Außenteil angeordnet. Bevorzugt umringt der Kanalträger das Innenteil und/oder den Elastomerkörper im Bereich der Flüssigkeitskammern. Insbesondere umringt der Kanalträger die Flüssigkeitskammern. Vorteilhaft sind die Flüssigkeitskammern durch den Elastomerkörper und den Kanalträger begrenzt. Bevorzugt besteht der Kanalträger aus Kunststoff. Das Vorsehen der Kanäle in dem Kanalträger bietet den Vorteil, dass eine Anpassung der Entkopplungsamplitude und/oder der Steifigkeitseigenschaften durch Einbau eines geeignet ausgebildeten Kanalträgers in das Elastomerlager möglich ist, ohne die Abmessungen und/oder Geometrie des Elastomerkörpers und/oder des Elastomerlagers ändern zu müssen. Für unterschiedliche Entkopplungsamplituden und/oder Steifigkeitseigenschaften können somit unterschiedliche Kanalträger vorgefertigt werden, wobei die anderen Bauteile des Elastomerlagers unverändert bleiben können. Die Kanäle sind z.B. in Form von Nuten in die Außenoberfläche des Kanalträgers eingebracht, die bevorzugt nach radial außen durch das Außenteil begrenzt sind. Vorzugsweise ist der zweite Kanal in die Außenoberfläche des Kanalträgers in Form einer Nut eingebracht, die bevorzugt nach radial außen durch das Außenteil begrenzt ist. Vorteilhaft ist der erste Kanal in die Außenoberfläche des Kanalträgers in Form einer Nut eingebracht, die bevorzugt nach radial außen durch das Außenteil begrenzt ist. Beispielsweise ist der Ventilkörper durch den Kanalträger gebildet.

Dem Elastomerlager ist bevorzugt eine Längsmittelachse zugeordnet, die insbesondere in der oder einer axialen Richtung verläuft. Ferner ist dem Elastomerlager bevorzugt eine radiale Richtung zugeordnet, die insbesondere senkrecht zur Längsmittelachse und/oder senkrecht zur axialen Richtung verläuft. Unter "radial" und/oder unter der oder einer radialen Richtung ist vorzugsweise eine oder jedwede Richtung zu verstehen, die senkrecht zur Längsmittelachse und/oder senkrecht zur axialen Richtung verläuft.

Das Außenteil ist bezüglich der Längsmittelachse bevorzugt rotationssymmetrisch oder im Wesentlichen rotationssymmetrisch ausgebildet. Ferner ist das Innenteil bezüglich der Längsmittelachse bevorzugt rotationssymmetrisch oder im Wesentlichen rotationssymmetrisch ausgebildet.

Gemäß einer Weiterbildung weist der erste Kanal und/oder der Kanalabschnitt einen zwischen den Ventilsitzen liegenden Scheitelpunkt auf. Insbesondere ist der Scheitelpunkt gegenüber den Ventilsitzen, vorzugsweise in derselben Richtung, axial versetzt. Bevorzugt liegen die Ventilsitze in oder bezüglich der axialen Richtung auf gleicher Höhe. Der Scheitelpunkt bildet insbesondere die definierte Lage und/oder die Nulllage oder Ruhelage und/oder die tiefste Stelle und/oder den Tiefpunkt. Vorteilhaft ist der Scheitelpunkt durch den Übergangsbereich gebildet oder der Scheitelpunkt bildet den Übergangsbereich.

Gemäß einer Ausgestaltung bildet das Elastomerlager ein Maschinenteil. Insbesondere ist das Elastomerlager in eine Maschine eingebaut. Vorzugsweise ist das Innenteil mit einem ersten Maschinenteil und das Außenteil mit einem zweiten Maschinenteil verbunden. Die Maschine ist z.B. ein Fahrzeug, insbesondere ein Kraftfahrzeug. Bevorzugt sind das erste und das zweite Maschinenteil Fahrzeugteile.

Gemäß einer bevorzugten Ausführungsform sind die Wirkflächen der Flüssigkeitskammern sehr viel größer als die Querschnittsfläche des ersten Kanals. Durch die hydraulische Übersetzung von den Wirkflächen der Flüssigkeitskammern auf die Querschnittsfläche des ersten Kanals wird somit eine Entkopplung sehr kleiner Anregungsamplituden ermöglicht. Die Wirkflächen der Flüssigkeitskammern sind dabei vorzugsweise durch Kammerwände oder die Kammerwände der Flüssigkeitskammern definiert oder gebildet. Vorzugsweise sind die die Wirkflächen definierenden oder bildenden Kammerwände durch den Elastomerkörper gebildet. Insbesondere ist der Freiweg oder freie Bewegungsweg des Absperrkörpers (Entkopplungselement) innerhalb des ersten Kanals deutlich größer, als die zu entkoppelnde Amplitude.

Bevorzugt ermöglicht das Elastomerlager eine Absenkung der Steifigkeit für definierte Weganregungen dadurch, dass ein bestimmtes Fluidvolumen zwischen den Flüssigkeitskammern (Arbeitskammern) ausgetauscht werden kann. Oberhalb dieser Anregungsamplituden verschließt der erste Kanal, welcher für die Entkopplung der Flüssigkeitskammern verantwortlich ist, durch das bidirektional wirkende Ventil, welches bevorzugt als bidirektional wirkendes Kugelventil ausgebildet ist. Der zweite Kanal, welcher bevorzugt eine geringere Resonanzlage als der erste Kanal aufweist, erlaubt für langsame Bewegungen bei großen Amplituden vorzugsweise dennoch einen Fluidaustausch zwischen den Flüssigkeitskammern. Daher kann das Elastomerlager bei unterschiedlichen Vorlasten eine Entkopplung der Flüssigkeitskammern bei dynamischen Anregungen mit kleinen Amplituden realisieren.

Die Funktionstüchtigkeit des Elastomerlagers, vorzugsweise bei unterschiedlichen Vorlasten, wird insbesondere dadurch sichergestellt, dass der zur Entkopplung eingesetzte Absperrkörper durch eine Rückstellkraft in die oder eine definierte Lage oder Nulllage bewegbar ist oder bewegt wird, insbesondere, sofern nur quasistatische Anregungen des Elastomerlagers vorliegen. Dabei kann die Rückstellkraft aus der Normalkraft auf den Absperrkörper in dem vorzugsweise V-förmigen Kanalabschnitt innerhalb des ersten Kanals generiert werden, wie sie beispielsweise aus der Gravitation oder Schwerkraft herrührt. Ebenso sind alternative Mechanismen, wie z.B. Federkräfte oder magnetische Wechselwirkungen denkbar, die eine Rückstellkraft generieren.

Ein bevorzugter Aspekt der Erfindung betrifft somit eine Kombination von zwei Kanälen (Arbeitskanäle), wobei ein erster der Kanäle ein bidirektional wirkendes Ventil umfasst, das insbesondere oberhalb eines definierten Fluidaustausches zwischen den Kammern über den ersten Kanal begrenzt, in Kombination mit einem zweiten der Kanäle, welcher vorzugsweise eine kleinere hydraulische Resonanzfrequenz als der erste Kanal aufweist.

Die Erfindung wird nachfolgend anhand einer bevorzugten Ausführungsform unter Bezugnahme auf die Zeichnung beschrieben. In der Zeichnung zeigen:
Fig. 1 eine Seitenansicht eines Elastomerlagers gemäß einer Ausführungsform,
Fig. 2 einen Längsschnitt durch das Elastomerlager entlang der aus Fig. 1 ersichtlichen Schnittlinie A-A,
Fig. 3 eine perspektivische Ansicht des Elastomerlagers, wobei ein Teil einer Außenhülse des Elastomerlagers weggelassen wurde,
Fig. 4 eine Draufsicht auf einen Kanalträger des Elastomerlagers und
Fig. 5 eine perspektivische Ansicht einer Halbschale des Kanalträgers.

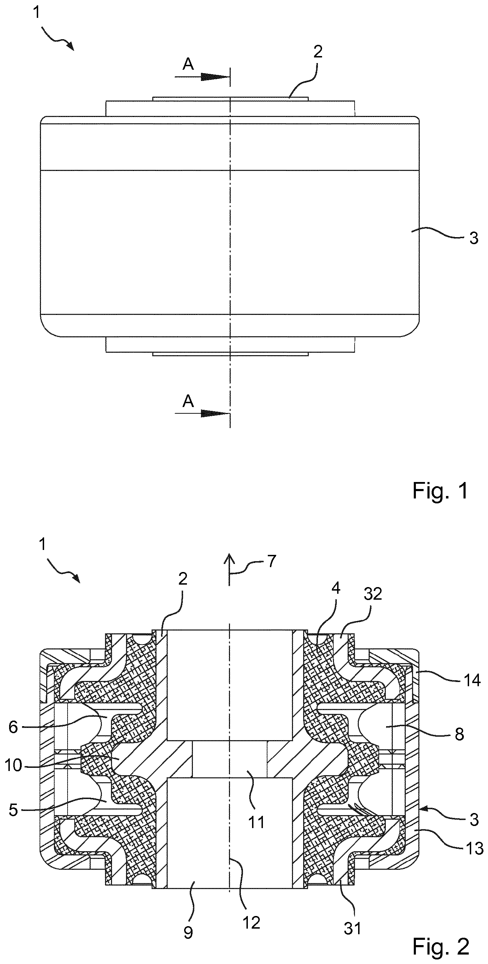

Aus Fig. 1 ist eine Seitenansicht eines Elastomerlagers 1 gemäß einer Ausführungsform ersichtlich, wobei Fig. 2 einen Längsschnitt durch das Elastomerlager 1 entlang der aus Fig. 1 ersichtlichen Schnittlinie A-A zeigt. Das Elastomerlager 1 weist ein Innenteil 2, eine das Innenteil 2 umringende Außenhülse 3, einen zwischen dem Innenteil 2 und der Außenhülse 3 angeordneten und sich von dem Innenteil 2 bis zu der Außenhülse 3 erstreckenden Elastomerkörper 4, der zwei mit einer Flüssigkeit gefüllte Flüssigkeitskammern 5 und 6 umfasst, die in einer axialen Richtung 7 übereinander angeordnet sind, und einen radial zwischen dem Elastomerkörper 4 und der Außenhülse 3 angeordneten und den Elastomerkörper 4 im Bereich der Flüssigkeitskammern 5 und 6 umringenden Kanalträger 8 auf, der zusammen mit dem Elastomerkörper 4 die Kammern 5 und 6 begrenzt. Der Elastomerkörper 4 ist stoffschlüssig mit dem Innenteil 2 verbunden, insbesondere an dieses anvulkanisiert. Ferner sind zur bereichsweisen Versteifung des Elastomerkörpers 4 zwei ringförmige Versteifungseinlagen 31 und 32 in den Elastomerkörper eingebettet, die entweder voneinander getrennte Elemente oder Teile eines in den Elastomerkörper eingebetteten Käfigs bilden.

Das Innenteil 2 erstreckt sich in axialer Richtung 7, ist im Wesentlichen zylindrisch ausgebildet und mit einer axial durchgehenden Ausnehmung 9 versehen. Ferner weist das Innenteil 2 zwischen den beiden Kammern 5 und 6 einen ringförmigen Bereich 10 größeren Außendurchmessers auf, wobei der ringförmigen Bereich 10 in den Elastomerkörper 4 eingebettet ist. Zusätzlich ist das Innenteil 2 derart ausgebildet, dass die Ausnehmung 9 am Ort des ringförmigen Bereichs 10 eine Einschnürung 11 aufweist.

Dem Elastomerlager 1 und/oder dem Innenteil 2 und/oder der Außenhülse 3 ist eine sich in axialer Richtung 7 erstreckende Längsmittelachse 12 zugeordnet, zu der das Innenteil 2 rotationssymmetrisch ist. Ferner ist die Außenhülse zu der Längsmittelsachse 12 rotationssymmetrisch, sodass das Innenteil 2 und die Außenhülse 3 koaxial angeordnet sind. Wie aus Fig. 2 ersichtlich, ist die Außenhülse 3 aus zwei hülsenförmigen Teilen 13 und 14 zusammengesetzt, was aus Montagegründen zweckmäßig aber nicht zwingend erforderlich ist.

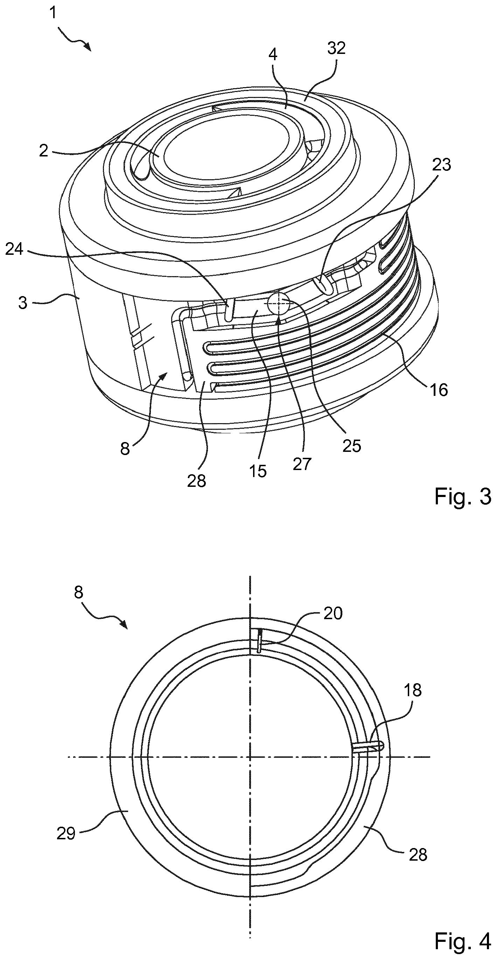

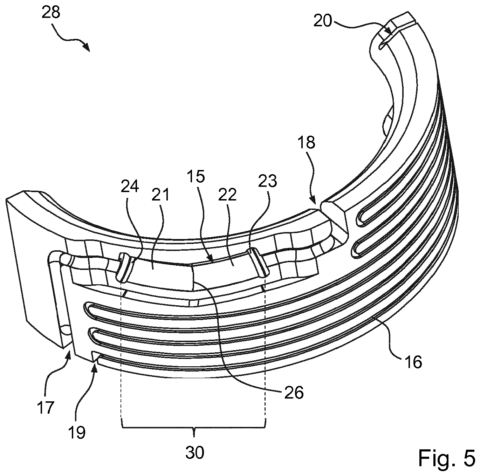

Aus Fig. 3 ist eine perspektivische Ansicht des Elastomerlagers 1 ersichtlich, wobei ein Teil der Außenhülse 4 weggelassen wurde, sodass ein Teil der Außenumfangsfläche des Kanalträgers 8 ersichtlich ist. Fig. 4 zeigt eine Draufsicht auf den ringförmigen Kanalträger 8, der aus zwei Halbschalen 28 und 29 zusammengesetzt ist, wobei die Halbschale 28 auch aus Fig. 3 und in perspektivischer Einzeldarstellung aus Fig. 5 ersichtlich ist.

In dem Kanalträger 8 sind ein erster Kanal 15 und ein zweiter Kanal 16 vorgesehen, wobei die Flüssigkeitskammern 5 und 6 durch jeden der Kanäle 15 bzw. 16 miteinander verbunden sind. Zum Anschließen der Kanäle 15 und 16 an die Flüssigkeitskammern 15 und 16 sind in dem Kanalträger 8 Durchgangsöffnungen 17, 18, 19 und 20 vorgesehen, wobei der erste Kanal 15 durch die Durchgangsöffnung 17 mit der Flüssigkeitskammer 5 und durch die Durchgangsöffnung 18 mit der Flüssigkeitskammer 6 verbunden ist. Ferner ist der zweite Kanal 16 durch die Durchgangsöffnung 19 mit der Flüssigkeitskammer 5 und durch die Durchgangsöffnung 20 mit der Flüssigkeitskammer 6 verbunden.

Der zweite Kanal 16 ist länger als der erste Kanal 15 ausgebildet und verläuft mäanderförmig. Ferner ist der Querschnitt des zweiten Kanals 16 kleiner als der Querschnitt des ersten Kanals 15. Der erste Kanal 15 weist zwei ineinander übergehende Kanalschenkel 21 und 22 auf, die relativ zueinander abgewinkelt und jeweils gerade ausgebildet sind. Die Kanalschenkel 22 und 21 weisen an ihren einander abgewandten Enden jeweils einen Ventilsitz 23 bzw. 24 auf, sodass der erste Kanal 15 zwischen den Ventilsitzen 23 und 24 V-förmig verläuft. Die Kanalschenkel 21 und 22 bilden somit einen V-förmigen Kanalabschnitt 30, an dessen Enden die Ventilsitze 23 und 24 vorgesehen sind. In dem ersten Kanal 15 ist zwischen den Ventilsitzen 23 und 24 ein kugelförmiger Absperrkörper 25 angeordnet, der zwischen den Ventilsitzen 23 und 24 entlang des ersten Kanals 15 bewegbar ist. Dabei ist der Durchmesser des Absperrkörpers 25 kleiner oder gleich dem Durchmesser des ersten Kanals 15 zwischen den Ventilsitzen 23 und 24. Das Elastomerlager 1 ist derart ausgerichtet, dass der Übergangsbereich 26 zwischen den beiden Kanalschenkel 21 und 22 bezüglich der Erdoberfläche einen Tiefpunkt des Kanalabschnitts 30 bildet. Dies hat zur Folge, dass die Erdanziehung eine Kraft auf den Absperrkörper 25 ausübt, die diesen in den Übergangsbereich 26 drängt.

Strömt aus der Flüssigkeitskammer 5 (erste Flüssigkeitskammer) Flüssigkeit in den ersten Kanal 15 ein, so strömt Flüssigkeit aus dem ersten Kanal 15 in die Flüssigkeitskammer 6 (zweite Flüssigkeitskammer) ein. Dabei wird der Absperrkörper 25 in Richtung des Ventilsitzes 23 (erster Ventilsitz) bewegt. Hält dieser Zustand lang genug an, legt sich der Absperrkörper 25 an den ersten Ventilsitz 23 an und sperrt den ersten Kanal 15 ab. Strömt hingegen aus der zweiten Flüssigkeitskammer 6 Flüssigkeit in den ersten Kanal 15 ein, so strömt Flüssigkeit aus dem ersten Kanal 15 in die erste Flüssigkeitskammer 5 ein. Dabei wird der Absperrkörper 25 in Richtung des Ventilsitzes 24 (zweiter Ventilsitz) bewegt. Hält dieser Zustand lang genug an, legt sich der Absperrkörper 25 an den zweiten Ventilsitz 24 an und sperrt den ersten Kanal 15 ab. Der Kanalabschnitt 30 und/oder die Kanalschenkel 21 und 22, die Ventilsitze 23 und 24 und der Absperrkörper 25 bilden somit gemeinsam ein bidirektional wirkendes Kugelventil 27, welches in dem ersten Kanal 15 vorgesehen ist. Durch den Durchmesser und die Länge der Kanalschenkel 21 und 22 sowie durch die Größe des Absperrkörpers ist somit ein Flüssigkeitsvolumen vorgegeben oder definiert, welches maximal zwischen den beiden Kammern 5 und 6 durch den ersten Kanal 15 ausgetauscht werden kann, bevor dieser gesperrt wird. Solange sich der Absperrkörper 25 zusammen mit der Flüssigkeit in dem ersten Kanal 15 bewegen kann und insbesondere an keinem der Ventilsitze 23 bzw. 24 anliegt, ist die Steifigkeit des Elastomerlagers 1 geringer, als wenn der Absperrkörper 25 an einem der Ventilsitze 23 bzw. 24 anliegt und den ersten Kanal 15 sperrt.

Ist durch eine mechanische Belastung des Elastomerlagers 1 der Absperrkörper 25 aus dem Übergangsbereich ausgerückt und hält diese mechanische Belastung für einen längeren Zeitraum an, so wird Flüssigkeit zwischen den Flüssigkeitskammern 5 und 6 durch den zweiten Kanal 16 ausgetauscht, bis ein Gleichgewichtszustand erreicht ist. Ferner bewegt sich der Absperrkörper 25 aufgrund der Erdanziehung zu dem Übergangsbereich 26 hin, der somit eine Nulllage für das Kugelventil 27 bildet.

Bei geeigneter geometrischer Auslegung des Kugelventils 27 und des zweiten Kanals 16 kann somit durch den ersten Kanal 15 eine gute Entkopplung von dynamischen und/oder periodischen Belastungen des Elastomerlagers 1 mit hoher Frequenz und kleiner Amplitude erzielt werden, wohingegen eine Entkopplung von dynamischen und/oder periodischen Belastungen des Elastomerlagers 1 mit kleiner Frequenz und großer Amplitude durch den zweiten Kanal erzielbar ist. Ferner können statische Vorlasten durch den zweiten Kanal ausgeglichen werden.

### Bezugszeichenliste

- 1: Elastomerlager
- 2: Innenteil
- 3: Außenhülse
- 4: Elastomerkörper
- 5: Flüssigkeitskammer
- 6: Flüssigkeitskammer
- 7: axiale Richtung
- 8: Kanalträger
- 9: Ausnehmung im Innenteil
- 10: ringförmiger Bereich des Innenteils
- 11: Einschnürung in Ausnehmung
- 12: Längsmittelachse
- 13: hülsenförmiges Teil der Außenhülse
- 14: hülsenförmiges Teil der Außenhülse
- 15: erster Kanal
- 16: zweiter Kanal
- 17: Durchgangsöffnung
- 18: Durchgangsöffnung
- 19: Durchgangsöffnung
- 20: Durchgangsöffnung
- 21: Kanalschenkel
- 22: Kanalschenkel
- 23: Ventilsitz
- 24: Ventilsitz
- 25: Absperrkörper
- 26: Übergangsbereich zwischen den Kanalschenkeln
- 27: bidirektional wirkendes Kugelventil
- 28: Halbschale des Kanalträgers
- 29: Halbschale des Kanalträgers
- 30: Kanalabschnitt
- 31: Versteifungseinlage
- 32: Versteifungseinlage

## Patentansprüche

1. Elastomerlager mit einem Innenteil (2), einem das Innenteil umringenden Außenteil (3) und einem zwischen dem Innenteil (2) und dem Außenteil (3) angeordneten und sowohl mit dem Innenteil (2) als auch mit dem Außenteil (3) verbundenen Elastomerkörper (4), der wenigsten zwei mit einer Flüssigkeit gefüllte Flüssigkeitskammern (5, 6) umfasst, die durch wenigstens zwei Kanäle (15, 16) miteinander verbunden sind, wobei in einem ersten der Kanäle (15) ein bidirektional wirkendes Ventil (27) vorgesehen ist, welches zwei im Abstand zueinander angeordnete Ventilsitze (23, 24) und einen zwischen diesen bewegbar angeordneten Absperrkörper (25) aufweist, der durch Schwerkraft oder einen Rückstellmechanismus in eine definierte Lage überführbar ist, **dadurch gekennzeichnet, dass** der erste Kanal (15) zwei in einem Übergangsbereich (26) ineinander übergehende Kanalschenkel (21, 22) umfasst, die zueinander abgewinkelt sind, wobei der Übergangsbereich (26) die definierte Lage bildet.

2. Elastomerlager nach Anspruch 1, **dadurch gekennzeichnet, dass** das Ventil (27) ein bidirektional wirkendes Kugelventil ist.

3. Elastomerlager nach Anspruch 1 oder 2, **dadurch gekennzeichnet, dass** die definierte Lage zwischen den Ventilsitzen (23, 24) liegt.

4. Elastomerlager nach einem der vorangehenden Ansprüche, **dadurch gekennzeichnet, dass** der Absperrkörper (25) in dem ersten Kanal (15) angeordnet ist und die Ventilsitze (23, 24) an den Enden des ersten Kanals (15) oder eines Kanalabschnitts (30) des ersten Kanals (15) vorgesehen sind.

5. Elastomerlager nach Anspruch 4, **dadurch gekennzeichnet, dass** der Kanalabschnitt (30) die beiden im Übergangsbereich (26) ineinander übergehende Kanalschenkel (21, 22) umfasst.

6. Elastomerlager nach einem der vorangehenden Ansprüche, **dadurch gekennzeichnet, dass** an den voneinander abgewandten Enden der Kanalschenkel (21, 22) die Ventilsitze (23, 24) vorgesehen sind.

7. Elastomerlager nach einem der vorangehenden Ansprüche, **dadurch gekennzeichnet, dass** der erste Kanal (15) zwischen den Ventilsitzen (23, 24) gekrümmt oder V-förmig verläuft.

8. Elastomerlager nach Anspruch 7, **dadurch gekennzeichnet, dass** das Elastomerlager (1) bezüglich der Erdoberfläche derart ausgerichtet ist, dass der erste Kanal (15) zwischen den Ventilsitzen (23, 24) eine tiefste Stelle (26) aufweist.

9. Elastomerlager nach Anspruch 8, **dadurch gekennzeichnet, dass** die tiefste Stelle durch den Übergangsbereich (26) gebildet ist.

10. Elastomerlager nach einem der vorangehenden Ansprüche, **dadurch gekennzeichnet, dass** sich das Innenteil (2) in einer axialen Richtung (7) erstreckt, wobei der erste Kanal (15) oder der Kanalabschnitt (30) einen zwischen den Ventilsitzen (23, 24) liegenden Scheitelpunkt aufweist, der gegenüber den Ventilsitzen (23, 24) axial versetzt ist.

11. Elastomerlager nach einem der vorangehenden Ansprüche, **dadurch gekennzeichnet, dass** sich das Innenteil (2) in einer oder der axialen Richtung (7) erstreckt, wobei die Flüssigkeitskammern (5, 6) axial zueinander versetzt angeordnet sind.

12. Elastomerlager nach einem der vorangehenden Ansprüche, **gekennzeichnet durch** einen zwischen dem Elastomerkörper (4) und dem Außenteil (3) angeordneten Kanalträger (8), in dem die Kanäle (15, 16) vorgesehen sind.

13. Elastomerlager nach einem der vorangehenden Ansprüche, **dadurch gekennzeichnet, dass** der Absperrkörper (25) eine Kugel ist.

## Claims

1. Elastomer bearing having an inner part (2), an outer part (3), which surrounds the inner part (2), and an elastomer body (4), which is arranged between the inner part (2) and the outer part (3), is connected both to the inner part (2) and to the outer part (3) and comprises at least two liquid chambers (5, 6) filled with a liquid which are connected by at , least two channels (15, 16), wherein a bidirectionally-acting valve (27) is provided in a first of the channels (15) and has two valve seats (23, 24), which are arranged apart from one another, and a shut-off body (25) which is movably arranged between these two valve seats (23, 24) and can be brought into a defined position by gravity or by a restoring mechanism, **characterised in that** the first channel (15) comprises two channel limbs (21, 22) which merge into one another in a junction area (26) and which are angled in relation to one another, wherein the junction area (26) forms the defined position.

2. Elastomer bearing according to claim 1, **characterised in that** the valve (27) is a bidirectionally-acting ball valve.

3. Elastomer bearing according to claim 1 or 2, **characterised in that** the defined position is located between the valve seats (23, 24).

4. Elastomer bearing according to any one of the preceding claims, **characterised in that** the shut-off body (25) is arranged in the first channel (15) and the valve seats (23, 24) are provided at the ends of the first channel (15) or of a channel section (30) of the first channel (15).

5. Elastomer bearing according to claim 4, **characterised in that** the channel section (30) comprises the two channel limbs (21, 22) which merge into one another in the junction area (26).

6. Elastomer bearing according to any one of the preceding claims, **characterised in that** the valve seats (23, 24) are provided at the ends of the channel limbs (21, 22) which are angled away from one another.

7. Elastomer bearing according to any one of the preceding claims, **characterised in that** the first channel (15) runs in a curved or V-shape between the valve seats (23, 24).

8. Elastomer bearing according to claim 7, **characterised in that** the elastomer bearing (1) is aligned in relation to the earth's surface such that the first channel (15) has a lowest point (26) between the two valve seats (23, 24).

9. Elastomer bearing according to claim 8, **characterised in that** the lowest point is formed by the junction area (26).

10. Elastomer bearing according to any one of the preceding claims, **characterised in that** the inner part (2) extends in an axial direction (7), wherein the first channel (15) or the channel section (30) has an apex located between the valve seats (23, 24) which is axially offset with respect to the valve seats (23, 24).

11. Elastomer bearing according to any one of the preceding claims, **characterised in that** the inner part (2) extends in an or in the axial direction (7), wherein the liquid chambers (5, 6) are arranged axially offset in relation to one another.

12. Elastomer bearing according to any one of the preceding claims, **characterised by** a channel carrier (8) which is arranged between the elastomer body (4) and the outer part (3) and in which channel carrier (8) the channels (15, 16) are provided.

13. Elastomer bearing according to any one of the preceding claims, **characterised in that** the shut-off body (25) is a ball.

## Revendications

1. Palier en élastomère avec une partie interne (2), une partie externe (3) entourant la partie interne et un corps en élastomère (4) disposé entre la partie interne (2) et la partie externe (3) et relié aussi bien avec la partie interne (2) qu'avec la partie externe (3), qui comprend au moins deux chambres de liquide (5, 6) remplie d'un liquide, qui sont reliées entre elles par au moins deux canaux (15, 16), dans lequel, dans un premier des canaux (15), est prévue une soupape (27) à action bidirectionnelle, qui comprend deux sièges de soupape (23, 24) disposés de manière distante entre eux et un corps d'arrêt (25) disposé de manière mobile entre ceux-ci, qui peut être amené par l'effet de la gravité ou par un mécanisme de rappel dans une position définie, **caractérisé en ce que** le premier canal (15) comprend deux branches de canal (21, 22) se fondant l'un dans l'autre dans une zone de transition (26), qui forment un angle entre eux, dans lequel la zone de transition (26) formant la position définie.

2. Palier en élastomère selon la revendication 1, **caractérisé en ce que** la soupape (27) est une soupape à bille à action bidirectionnelle.

3. Palier en élastomère selon la revendication 1 ou 2, **caractérisé en ce que** la position définie se trouve entre les sièges de soupape (23, 24).

4. Palier en élastomère selon l'une des revendications précédentes, **caractérisé en ce que** le corps d'arrêt (25) est disposé dans le premier canal (15) et les sièges de soupape (23, 24) sont prévus au niveau des extrémités du premier canal (15) d'une portion de canal (30) du premier canal (15).

5. Palier en élastomère selon la revendication 4, **caractérisé en ce que** la portion de canal (30) comprend les deux branches de canal (21, 22) se fondant l'une dans l'autre dans la zone de transition (26).

6. Palier en élastomère selon l'une des revendications précédentes, **caractérisé en ce que** les sièges de soupape (23, 24) sont disposés au niveau des extrémités opposées des branches de canal (21, 22).

7. Palier en élastomère selon l'une des revendications précédentes, **caractérisé en ce que** le premier canal (15) s'étend entre les sièges de soupape (23, 24) de manière courbée ou en forme de V.

8. Palier en élastomère selon la revendication 7, **caractérisé en ce que** le palier en élastomère (1) est orientée par rapport à la surface de la terre de façon à ce que le premier canal (15) comprenne, entre les sièges de soupape (23, 24), un point le plus bas (26).

9. Palier en élastomère selon la revendication 8, **caractérisé en ce que** le point le plus bas est constitué de la zone de transition (26).

10. Palier en élastomère selon l'une des revendications précédentes, **caractérisé en ce que** la partie interne (2) s'étend dans une direction axiale (7), dans lequel le premier canal (15) ou la portion de canal (30) comprend un sommet se trouvant entre les sièges de soupape (23, 24), qui est décalé axialement par rapport aux sièges de soupape (23, 24).

11. Palier en élastomère selon l'une des revendications précédentes, **caractérisé en ce que** la partie interne (2) s'étend dans une ou dans la direction axiale (7), dans lequel les chambres de liquide (5, 6) sont disposées de manière décalée axialement entre elles.

12. Palier en élastomère selon l'une des revendications précédentes, **caractérisé par** un support de canal (8), disposé entre le corps en élastomère (4) et la partie externe (3), dans lequel les canaux (15, 16) sont prévus.

13. Palier en élastomère selon l'une des revendications précédentes, **caractérisé en ce que** le corps d'arrêt (25) est une bille.
